# EUROPEAN PATENT APPLICATION

(11) **EP 4 782 247 A1**
(43) Date of publication of application: **29.07.2026**
(21) Application number: 25305076.9
(22) Date of filing: 22.01.2025
(51) Int. Cl.: B60L 1/00, B60L 3/00, B60L 3/12, B60L 5/18, B60L 7/18, B60L 7/22, B60L 7/26, B60L 15/20, B60M 3/06, B60T 8/17, B60T 13/66, B60T 17/22, B60W 30/18, B61C 3/02, B61L 15/00

(54) **SYSTEM AND METHOD FOR OPTIMIZING ELECTRICAL BRAKING ONBOARD A RAILWAY VEHICLE**

(71) Applicant: ALSTOM Transport SA, 93400 St-Ouen sur Seine (FR)
(72) Inventor: HIBON, Samuel, 72000 LE MANS (FR); MAUGIS, Thomas, 92600 ASNIERES SUR SEINE (FR); BARRAZA LASSO, Daniel, 75011 PARIS (FR); ANDRIAMPARANY, Tamby, 78510 TRIEL SUR SEINE (FR); VON MACH, Stefan, 13189 BERLIN (DE); BONY, Sylvain, 95880 ENGHIEN LES BAINS (FR)
(74) Representative: Plasseraud IP

(57) **Abstract**

System (1) for optimizing electrical braking operations onboard of a railway vehicle travelling along a railway line, the system (1) comprising at least a brake controller (2) and an electronic controller (3) which is configured to:
- calculate, substantially continuously, values of a maximum regenerative electrical power usable by at least one of one or more onboard power consumer devices (10), one or more onboard rechargeable batteries (11), and an external electrical power supplying line (12) laid along the railway line and suitable to supply the railway vehicle while travelling;
- based on each calculated value of the maximum regenerative electrical power usable, calculate substantially continuously, a corresponding electric braking curve;
- provide, for a driver of the railway vehicle, based on the electric braking curve calculated and an actual speed of the railway vehicle, a positioning information (6) indicative of where to position the brake controller (2) to thereby obtain, via electrical braking, the calculated maximum regenerative electrical power usable.

## Description

The present invention concerns a system and a method for optimizing electrical braking onboard of railway vehicles.

The term railway vehicle has to be understood hereby in the broadest sense possible and as encompassing any type of train or convoy formed by any number of wagons, carriages, cars or similar terms.

As known, braking systems of railways vehicles comprise usually a mechanical brake and an electric brake.

During trips, due to constraints dictated by norms and in order to avoid as much as possible mechanical braking, the electric brake is used first and, if the required total braking force cannot be obtained, the mechanical brake intervenes to supplement the electric brake.

To this end, train drivers have to manage the braking demand through the positioning of the braking handle, and a proper positioning of the braking handle allows in principle to use only, or at least predominantly, electrical braking.

However, nowadays train drivers do not have any specific guidance indicating in real time what would be the proper position of the braking handle and, even if only electrical braking is used, the regenerative electrical energy thus generated may not be recovered and may be burnt in the rheostatic brake.

The present invention is aimed at providing a solution capable of at least mitigating one or more of the above issues, and in particular to provide train drivers with a guidance suitable for optimizing, with respect to known solutions, the use of electrical braking onboard of railways vehicles.

This aim is achieved by a system for optimizing electrical braking operations onboard of a railway vehicle travelling along a railway line, the system 1 comprising at least a brake controller and an electronic controller which is configured to:
- calculate, substantially continuously, values of a maximum regenerative electrical power usable by at least one of one or more onboard power consumer devices, one or more onboard rechargeable batteries, and an external electrical power supplying line laid along the railway line and suitable to supply the railway vehicle while travelling;
- based on each calculated value of the maximum regenerative electrical power usable, calculate substantially continuously, a corresponding electric braking curve;
- provide, for a driver of the railway vehicle, based on the electric braking curve calculated and an actual speed of the railway vehicle, a positioning information indicative of where to position the brake controller to thereby obtain, via electrical braking, the calculated maximum regenerative electrical power usable.

This aim is also achieved by a railway vehicle comprising such optimizing system.

This aim is also achieved by a method for optimizing electrical braking operations onboard of a railway vehicle travelling along a railway line, the method comprising at least:
- a first step of calculating substantially continuously, values of a maximum regenerative electrical power usable by at least one of one or more onboard power consumer devices, one or more onboard rechargeable batteries, and an external electrical power supplying line laid along the railway line and suitable to supply the railway vehicle while travelling;
- a second step of calculating substantially continuously, based on each calculated value of the maximum regenerative electrical power usable, a corresponding electric braking curve;
- a third step of providing for a driver of the railway vehicle, based on the electric braking curve calculated and an actual speed of the railway vehicle, an positioning information indicative of where to position a brake controller to thereby obtain, via electrical braking, the calculated maximum regenerative electrical power usable.

Preferred embodiments of the invention are specified in the dependent claims, the contents of which are to be understood as an integral part of this description.

Further characteristics and advantages will become apparent from the description of some preferred but not exclusive exemplary embodiments of a system and a method according to the present disclosure, illustrated only by way of non-limitative examples with the accompanying drawings in which:
Figure 1 is a block diagram schematically illustrating a system for optimizing electrical braking operations onboard of a railway vehicle travelling along a railway line, according to the invention;
Figure 2 is a flow diagram schematically illustrating a method for optimizing electrical braking operations onboard of a railway vehicle travelling along a railway line, according to the invention;
Figure 3 graphically illustrates some braking Force-speed curves.

It should be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

In addition, when the term "about" or "substantial" or "substantially" is used herein, it has to be understood as encompassing unavoidable inertia, or an actual variation of plus or minus 5% with respect to an indicated reference value, axis, time or position.

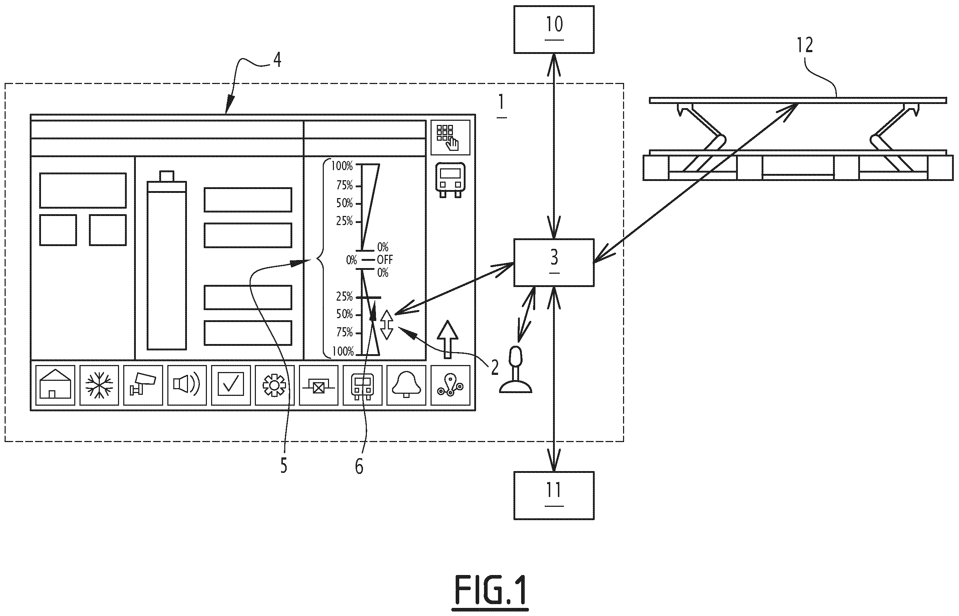

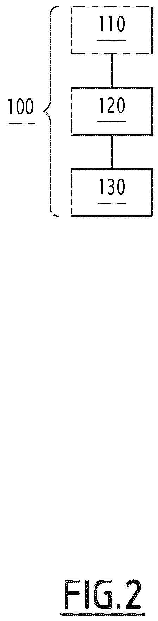

Figures 1 and 2 schematically illustrate a system and a method for optimizing electrical braking operations onboard of a railway vehicle travelling along a railway line, indicated by the overall reference number 1 and 100, respectively.

As illustrated in figure 1, the system 1 comprises at least a brake controller, schematically represented by the reference number 2, and an electronic controller schematically represented by the reference number 3.

The brake controller 2 is for example shown, via a double arrow icon, in a braking position on the display 4 inside the driving cabin of the railway vehicle, and is movable by a vehicle's driver along a braking scale 5 shown on the display 4 to thereby modify the percentage of braking force that can be exerted during braking operations.

Usefully, in the system 1 according to the invention, the electronic controller 3 is configured to calculate, substantially continuously, values of the maximum regenerative electrical power usable by at least one of:
- one or more onboard power consumer devices 10;
- one or more onboard rechargeable batteries 11; and
- an external electrical power supplying line 12 laid along the railway line and suitable to supply the railway vehicle while travelling.

Conveniently, the electronic controller 3 is further configured to:
- calculate, substantially continuously, and based on each calculated value of the maximum regenerative electrical power usable, a corresponding electric braking curve;
- provide, for a driver of the railway vehicle, based on the electric braking curve calculated and the actual speed the railway vehicle, a positioning information indicative of where to position the brake controller 2 to thereby obtain, via electrical braking, the calculated maximum regenerative electrical power usable by the at least one power consumer device 10, 11 and/or the external electrical power supplying line 12.

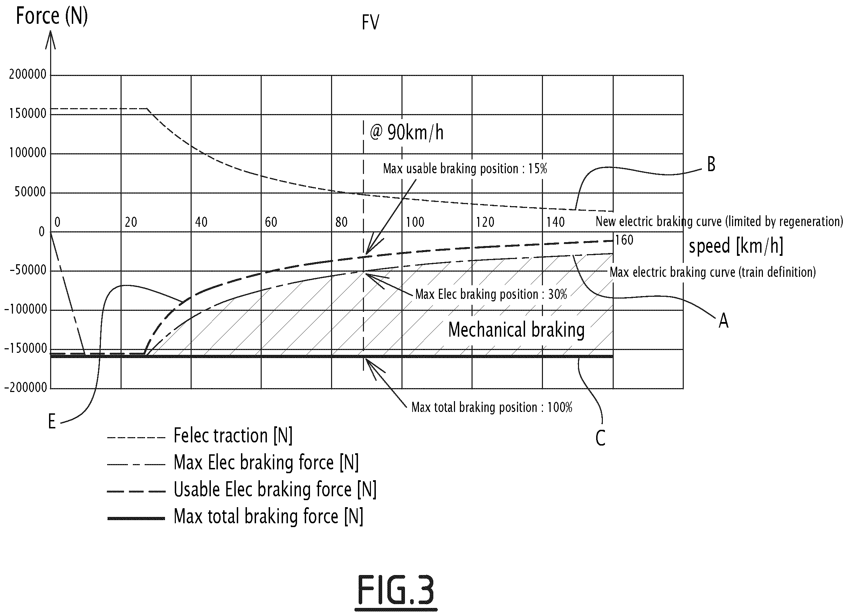

An example of an electrical braking curve is represented in figure 3 with the dotted line E.

In figure 3, the curve A represents the maximum value of the electrical braking effort, the curve B represents the pattern of the electrical traction force, the curve C represents the total braking effort.

The area comprised between the curves A and E represents the electrical braking energy that cannot be regenerated and can be burnt in the rheostatic chopper or transferred to the mechanical brakes, and the area below the curve A represents where the mechanical braking effort always intervenes.

Each of the electrical braking curves calculated represents at each moment of calculation, the relationship between the braking effort and the speed for each calculated value of the maximum regenerative electrical power usable, and puts in relationship the electric power to the corresponding percentage of usage of the brake controller 2.

For example, if a train can normally brake at 1500kW at 90km/h (38% of the global force) associated with mechanical brake effort (62% of the total force) with the brake controller 2 in the 100% position, then if the total electric power usable at that moment is 1000kW, the positioning information will be displayed on the braking scale 5 at the 25% position.

In one possible embodiment, the electronic controller 3 is configured to cause displaying the positioning information in the form of a visual sign at a position along the braking scale 5 where the driver has to put the brake controller 2.

For example, the positioning information is represented in figure 1 by a horizontal line 6, e.g. a colored line.

The positioning information 6 constitutes a specific and direct guidance for the driver for optimizing the use of electrical braking, thereby rendering the recover and exploitation of regenerative electrical power very efficient and effective.

Clearly, depending on the specific calculations, the positioning information 6 can be moved along the braking scale 5.

In another possible embodiment, the visual sign can be a simple light indicator on the console to show that the position is the best one.

Clearly, several solutions can be adapted to help the driver to select the best position of the brake controller 2.

In one possible embodiment, the electronic controller 3 is configured to calculate the values of the maximum regenerative electrical power usable based on the electric power usable by one or more onboard power consumer devices 10, such as onboard auxiliary loads, for example HVAC systems.

These values can be for example the global amount of power needed by all the onboard auxiliary loads that are working on the railway vehicle, or only of a part thereof which can be properly pre-selected.

In one possible embodiment, the electronic controller 3 is configured to calculate the values of the maximum regenerative electrical power usable based on the electric power acceptable by one or more onboard rechargeable batteries 11 for being recharged.

In one possible embodiment, the electronic controller 3 is configured to calculate the values of the maximum regenerative electrical power usable based on checking whether the external electrical power supplying line 12 is in condition to receive electric power from the railway vehicle or not.

For example, the electronic controller 3 can determine whether the external electrical power supplying line 12 is in condition to receive electric power from the railway vehicle by monitoring the voltage of the external electrical power supplying line 12.

The external electrical power supplying line 12 is for instance a catenary line and the electronic controller 3 can check the voltage of the catenary line and, based on such voltage, can determine if regenerative electric power obtained via electrical braking can be injected by the railway vehicle into the catenary line or not.

Clearly, the external electrical power supplying line 12 can be any suitable type of railway feeding line, e.g. a third rail.

As those skilled in the art may readily appreciate, depending on the specific applications, the electronic controller 3 can be configured to calculate the amount of maximum regenerative electrical power usable based on, only one or any suitable combination of the following:
- the electric power usable by one or more onboard auxiliary loads 10; and/or
- the electric power acceptable by one or more onboard rechargeable batteries 11 for being recharged; and/or
- whether the external electrical power supplying line 12 is in condition to receive electric power from the railway vehicle or not.

For example, if onboard the railway vehicle the total amount of power of auxiliary loads to be supplied is 200kW, and there is one battery to be recharged at 800kW, and there is no external power supplying line 12 or the external power supplying line 12 cannot accept regenerative power, then the regenerative power usable and obtainable via electric braking would be limited to 1000kW.

For example, with a train designed to use a maximum of 1500kW of electrical braking power associated to a mechanical brake, at 90km/h the maximum braking effort corresponding to the 100% position of the controller 2 is 160kN. Thus, the maximum electrical force is 60kN corresponding to 1500kW and corresponding to the 38% of the controller's position on the braking scale 5.

If there are no batteries to be recharged, and there is no external power supplying line 12 or the external power supplying line 12 cannot accept regenerative power, then the regenerative power usable and obtainable via electric braking would be limited to 200kW.

Then, using the formula Foptim = Poptim/v, if the maximum electrical effort is 60kN (at 90km/h for a power of 1500kW) and the authorized power is only 1000kW, the "optimized effort" F is 40kN and the position of the brake controller 2 is calculated at 25%.

As above indicated, figure 2 schematically illustrates a method 100 for optimizing electrical braking operations onboard of a railway vehicle travelling along a railway line, which can be executed for example via the system 1 previously described.

As illustrated, the method 100 comprises at least:
- a first step 110 of calculating substantially continuously, for example via the onboard controller 3, values of the maximum regenerative electrical power usable by at least one of one or more onboard power consumer devices 10, one or more onboard rechargeable batteries 11, and an external electrical power supplying line 12 laid along the railway line and suitable to supply the railway vehicle while travelling;
- a second step 120 of calculating substantially continuously, for example via the onboard controller 3, based on each calculated value of the maximum regenerative electrical power usable, a corresponding electric braking curve;
- a third step 130 of providing for a driver of the railway vehicle, based on the electric braking curve calculated, in particular lastly calculated, and the actual speed of the railway vehicle, a positioning information indicative of where to position a brake controller 2 to thereby obtain, via electrical braking, the calculated maximum regenerative electrical power usable.

In particular, the third step 130 comprises displaying, for example on the console 4 of the railway vehicle, the positioning information 6 in the form of a visual sign, e.g. a horizontal line 6, at a position along a braking scale 5 where the driver has to put the brake controller 2.

In one possible embodiment, the first step 110 comprises calculating values of the maximum regenerative electrical power usable based on the electric power usable by one or more onboard auxiliary loads 10.

In one possible embodiment, the first step 110 comprises calculating values of the maximum regenerative electrical power usable based on the electric power usable by one or more onboard rechargeable batteries 11 for being recharged.

In one possible embodiment, the first step 110 comprises calculating values of the maximum regenerative electrical power usable based on checking whether the external electrical power supplying line 12 is in condition to receive electrical power from the railway vehicle or not.

As above indicated, depending on the applications, the maximum regenerative electrical power usable can be calculated considering only the electric power usable by one or more onboard auxiliary loads 10, only on the electric power usable by one or more onboard rechargeable batteries 11 for being recharged, only whether the external electrical power supplying line 12 is in condition to receive electrical power from the railway vehicle or not, or on a combination of two or all of the above three items.

Hence, it is evident from the foregoing description that the system 1 and method 100 according to the present invention allow achieving the intended aim since they provide drivers of railway vehicles with a very simple, immediate and very effective guidance about where to position the braking controller to thereby optimize the use of electrical braking and the exploitation of regenerative electrical power produced during electrical braking operations.

The system 1 has a very simple structure which allows using it in principle onboard of any type of transportation vehicles, and in particular onboard of railway vehicles, such as trains, be them new railway vehicles or already operating ones which can be easily refurbished with the system 1.

The system 1 and method 100 thus conceived are susceptible of modifications and variations, all of which are within the scope of the inventive concept as defined in particular by the appended claims; for example, the electronic 3 can be constituted by or comprised in any electronic control unit already present onboard the railway vehicle itself and used also for other tasks/functionalities, or can be a separate electronic controller specifically devised for the functionalities of the system 1, and for instance also for carrying out the method 100, according to the present disclosure. All the details may furthermore be replaced with technically equivalent elements.

## Claims

1. System (1) for optimizing electrical braking operations onboard of a railway vehicle travelling along a railway line, the system (1) comprising at least a brake controller (2) and an electronic controller (3) which is configured to:
- calculate, substantially continuously, values of a maximum regenerative electrical power usable by at least one of one or more onboard power consumer devices (10), one or more onboard rechargeable batteries (11), and an external electrical power supplying line (12) laid along the railway line and suitable to supply the railway vehicle while travelling;
- based on each calculated value of the maximum regenerative electrical power usable, calculate substantially continuously, a corresponding electric braking curve;
- provide, for a driver of the railway vehicle, based on the electric braking curve calculated and an actual speed of the railway vehicle, a positioning information (6) indicative of where to position the brake controller (2) to thereby obtain, via electrical braking, the calculated maximum regenerative electrical power usable.

2. The system (1) of claim 1, further comprising a console (4) provided with a braking scale (5), and wherein said electronic controller (3) is configured to cause displaying a positioning information (6) at a position along said braking scale (5) where the driver has to put the brake controller (2).

3. The system (1) of any of claims 1 and 2, wherein said electronic controller (3) is configured to calculate said values of the maximum regenerative electrical power usable based on the electric power usable by one or more onboard power consumer devices (10).

4. The system (1) of any of claims 1 to 3, wherein said electronic controller (3) is configured to calculate said values of the maximum regenerative electrical power usable based on the electric power acceptable by one or more onboard rechargeable batteries (11) for being recharged.

5. The system (1) of any of claims 1 to 4, wherein said electronic controller (3) is configured to calculate said values of the maximum regenerative electrical power usable based on checking whether said external electrical power supplying line (12) is in condition to receive electric power from the railway vehicle or not.

6. A railway vehicle **characterized in** comprising a system (1) according to one or more of the previous claims.

7. Method (100) for optimizing electrical braking operations onboard of a railway vehicle travelling along a railway line, the method (100) comprising at least:
- a first step (110) of calculating substantially continuously, values of a maximum regenerative electrical power usable by at least one of one or more onboard power consumer devices (10), one or more onboard rechargeable batteries (11), and an external electrical power supplying line (12) laid along the railway line and suitable to supply the railway vehicle while travelling;
- a second step (120) of calculating substantially continuously, based on each calculated value of the maximum regenerative electrical power usable, a corresponding electric braking curve;
- a third step (130) of providing for a driver of the railway vehicle, based on the electric braking curve calculated and an actual speed of the railway vehicle, an positioning information (6) indicative of where to position a brake controller (2) to thereby obtain, via electrical braking, the calculated maximum regenerative electrical power usable.

8. The method (100) of claim 7, wherein said third step (130) comprises displaying, on a console (4) of the railway vehicle, the positioning information (6) at a position along a braking scale (5) where the driver has to put the brake controller (2).

9. The method (100) of any of claims 7 and 8, wherein said first step (110) comprises calculating values of the maximum regenerative electrical power usable based on the electric power usable by one or more onboard power consumer devices (10).

10. The method (100) of any of claims 7 to 9, wherein said first step (110) comprises calculating values of the maximum regenerative electrical power usable based on the electric power usable by one or more onboard rechargeable batteries (12) for being recharged.

11. The method (100) of any of claims 7 to 10, wherein said first step (110) comprises calculating values of the maximum regenerative electrical power usable based on checking whether said an external electrical power supplying line (12) is in condition to receive electrical power from the railway vehicle or not.
